# EUROPÄISCHE PATENTANMELDUNG

(11) **EP 2 305 037 A1**
(43) Veröffentlichungstag der Anmeldung: **06.04.2011**
(21) Anmeldenummer: 10178218.3
(22) Anmeldetag: 22.09.2010
(51) Int. Cl.: A21B 1/44, F24C 15/34

(54) **Stikkenofen**

(30) Priorität: 30.09.2009 DE 102009043806
(71) Anmelder: Wachtel GmbH & Co. Bäckereimaschinen-Backöfen, D-40721 Hilden (DE)
(72) Erfinder: Kesselhut, Uwe, 40668 Meerbusch (DE)
(74) Vertreter: Prüfer & Partner GbR European Patent Attorneys

(57) **Zusammenfassung**

Die Erfindung bezieht sich auf einen Ofen (1), insbesondere einen Stikkenofen. Dieser besitzt eine Backkammer (2) mit einer Backkammerwand (3) und einen die Backkammer (2) umlaufenden Heizgaskanal (10) mit einer der Backkammer (2) zugewandten Wand und einer der Backkammer (2) abgewandten Wand. Die der Backkammer (2) abgewandte Wand des Heizgaskanals (10) wird durch eine Wärmetauscherwand (13) gebildet, über die Wärme an Heißluft (18) in einem an die Wärmetauscherwand (13) angrenzenden Heißluftkanal (14) geleitet wird, und die der Backkammer (2) zugewandte Wand wird durch die Backkammerwand (3) gebildet, über die Wärme in die Backkammer (2) abgestrahlt wird.

## Beschreibung

Die vorliegende Erfindung bezieht sich auf einen Ofen und insbesondere auf einen Stikkenofen bzw. Backschrank.

Ein herkömmlicher Stikkenofen besitzt eine Backkammer, in der beispielsweise Brot, Brötchen, Brezen etc. gebacken werden können. Das Backgut wird dabei in einem Backgutträger, auch Backwagen bzw. Stikkenwagen genannt, angeordnet. Der Backwagen ist fahrbar, so dass er bereits vor dem Backvorgang außerhalb des Ofens bestückt werden kann und dann komplettiert in den Ofen gefahren werden kann. Im Ofen steht der Backwagen auf einer angetriebenen Drehplatte, mit der der Backwagen während des Backvorgangs gedreht werden kann, um das Backgut gleichmäßig zu backen. Alternativ kann eine Hebevorrichtung im Ofen vorgesehen sein, die zudem auch als Drehvorrichtung fungiert, so dass sie drehend angetrieben werden kann. Der Backwagen wird dann im Ofen aufgehängt, so dass er frei schwebt und mit Hilfe der Drehvorrichtung in der Backkammer rotiert.

Der Backofen wird durch Umwälzung von Heißluft mittels einem oder mehrerer Heißluftgebläse beheizt.

Zum Heizen kann Öl, Gas oder elektrische Energie verwendet werden. Zur Erwärmung der zum Backen notwendigen Heißluft diente bisher ein Wärmetauscher, wie beispielsweise ein Röhrentauscher oder ein Taschentauscher. Ein Röhrentauscher beispielsweise weist mehrere Rohre auf, die durch eine Heizkammer laufen. Durch die Rohre strömt das heiße Abgas eines Brenners. Mittels Ventilatoren wird die zu erhitzende Luft durch diese Heizkammer geleitet, so dass die Luft die Wärme, die die Rohre abgeben, aufnehmen kann. Von der Heizkammer wird die erwärmte Heißluft in die Backkammer weitergeleitet und bringt die Backkammer auf die gewünschte Backtemperatur.

Alle Ausführungen der Wärmetauscher müssen aus hitzebeständigen Werkstoffen gefertigt werden. Diese Wärmetauscher haben eine beträchtliche Größe, so dass dadurch der Ofen insgesamt einen großen Platz benötigt. Das macht den Ofen sperrig und zudem teuer. Der Wärmetauscher darf jedoch auch nicht überhitzen. Um eine Überhitzung zu verhindern, muss der Wärmetauscher gekühlt werden. Dazu ist ein hoher Luftdurchsatz der Heißluft nötig, der nur durch eine hohe Laufgeschwindigkeit der Ventilatoren realisiert werden kann. Die Ventilatoren müssen zu diesem Zweck in der Regel mit einer hohen Laufgeschwindigkeit betrieben werden. Die dadurch erzielte hohe Luftmenge kühlt zwar den Wärmetauscher ausreichend, bringt jedoch den Nachteil mit sich, dass das Backgut stärker austrocknet, was zu einer Qualitätsminderung der Ware führt. Außerdem müssen Ventilatorlaufräder mit einem großen Platzbedarf verwendet werden (großer Durchmesser bei Radialventilatoren oder große Länge bei Querstromgebläsen). Dies führt ebenfalls zu hohen Herstellungskosten.

Ein weiterer Nachteil der herkömmlichen Wärmetauscher liegt in ihrer aufwendigen und damit auch sehr teuren Herstellung. Noch gravierender sind die Kosten für Reparatur oder Austausch. Trotz der Verwendung von hitzefesten Werkstoffen ist ein Austausch nach max. zehn Jahren unumgänglich.

Weiterhin werden Stikkenöfen verwendet, deren Wärmetauscher aus flachen Platten bestehen, an deren einen Seite Heizgas, das beispielsweise von einem Brenner erhitzt wurde, entlang strömt, und auf deren anderen Seite Heißluft zum Einleiten in die Backkammer und damit zum Erwärmen des Backguts vorbei geleitet wird.

Es ist Aufgabe der vorliegenden Erfindung, einen Ofen zu schaffen, der günstiger in der Anschaffung ist und dessen Platzbedarf reduziert werden kann. Außerdem soll der Ofen wartungsarm und kostengünstig im Betrieb sein. Dies alles soll möglich sein, ohne dabei Qualitätseinbußen am Backgut hinnehmen zu müssen.

Diese Aufgabe wird mit einem Ofen gelöst, der die Merkmale des Anspruchs 1 enthält.

Vorteilhafte Weiterbildungen sind Gegenstand der Unteransprüche.

Durch die Gestaltung des Ofens mit einem Heizgaskanal, der eine einer Backkammer abgewandte Wand, an die angrenzend ein Heißluftkanal vorgesehen ist, und eine der Backkammer zugewandte Wand aufweist, wobei die der Backkammer zugewandte Wand durch die Backkammerwand selbst gebildet wird, ist es möglich, einen Wärmeübergang von einem Heizgas in dem Heizgaskanal einerseits auf zu erwärmende Heißluft, die den Heißluftkanal durchströmt, zu ermöglichen, und andererseits einen Wärmeübergang von dem Heizgaskanal durch Strahlungswärme direkt in die Backkammer zu schaffen. Dadurch verbessert sich die Nutzung der eingesetzten Energie wesentlich und die Backzeiten können verkürzt werden. Außerdem kann durch Nutzung der Strahlungswärme das Backgut schonender gebacken werden ohne auszutrocknen.

Sowohl die der Backkammer zugewandte Wand als auch die von der Backkammer abgewandte Wand weisen vorteilhafterweise eine Höhe von im Wesentlichen 2000 mm auf. Hierbei wird dann im Wesentlichen die gesamte Höhe der Backkammer zu dem Wärmeübergang verwendet, was einen großen Wärmeübergang ermöglicht, da eine große Fläche dafür vorhanden ist.

Besonders vorteilhaft ist das Vorsehen eines senkrecht stehenden zylindrischen Brennraums für die Heizquelle. Durch eine solche Form des Brennraums prallt eine Flamme eines Brenners nicht gegen eine Wand des Brennraums, sondern kann sich in einem langen Raum erstrecken und somit eine gute Wärmeverteilung über der Höhe des Brennraums ermöglichen. Weiterhin wird durch diese Anordnung eine punktuelle Überhitzung des Materials verhindert, die bei einem Auftreffen der Flamme auf die Brennkammerwand entsteht und eine Reparatur des Ofens früher erforderlich macht.

Außerdem ist es vorteilhaft, wenn der Heizgaskanal als ein flacher Kanal vorgesehen ist, an dessen einen Ende die Heizquelle und dessen anderen Ende ein Kamin vorgesehen ist. Das Heizgas strömt von einem Ende des die Brennkammer umgebenden Heizgaskanals zu dem anderen Ende, was wiederum die wirksame Fläche für den Wärmeübergang vergrößert. Durch das Vorsehen des Heizgaskanals als einen flachen Kanal ist weiterhin das Verhältnis zwischen der Fläche für den Wärmeübergang und dem durchströmenden Volumen des Heizgases günstig. Daraus ergibt sich ein hoher Wirkungsgrad für den Wärmeübergang.

Besonders vorteilhaft ist es, wenn die der Backkammer zugewandte Wand des Heizgaskanals so ausgebildet ist, dass Strahlungswärme an die Backkammer abgegeben wird. Dies wird durch eine geeignete Oberflächenstruktur und ein Material, das gute Wärmeleiteigenschaften besitzt, erreicht.

Ferner ist es vorteilhaft, wenn die Heizquelle und der Kamin so angeordnet sind, dass das Heizgas den Heizgaskanal in einer um die Backkammer umlaufende Richtung durchströmt, und ein Heißluftventilator, Auslassöffnungen und Ansaugöffnungen des Heißluftkanals so angeordnet sind, dass die Heißluft in einer um die Backkammer umlaufende, der Richtung der Heizgasströmung entgegengesetzte Richtung durchströmt. Damit wird der Wärmeübergang vom Heizgas auf die Heißluft verbessert.

In vorteilhafter Weise sind die Ansaugöffnungen und die Auslassöffnungen des Heißluftkanals im Wesentlichen über die gesamte Höhe der Backkammer verteilt gegenüberliegend angeordnet. Somit ergibt sich eine Strömung in Form einer horizontalen Schicht, die sich über annähernd die gesamte Höhe der Backkammer erstreckt. Damit wird in der Backkammer vorhandenes Backgut gleichmäßig und effektiv erwärmt.

Besonders vorteilhaft ist, wenn der Heißluftventilator als Radialventilator ausgebildet ist. Dies ermöglicht die Anordnung des Ventilators über annähernd die gesamte Höhe des Heißluftkanals. Dadurch wird eine gleichmäßige Durchströmung der Backkammer durch die Heißluft über annähernd die gesamte Höhe der Backkammer ermöglicht. Weiterhin wird eine große Luftmenge bei niedriger Luftgeschwindigkeit ermöglicht, was den Wärmeübergang von dem Heizgas zur Heißluft und von der Heißluft zum Backgut verbessert.

Ferner ist es vorteilhaft, wenn die der Backkammer abgewandte Wand des Heizgaskanals aus Stein ausgebildet ist. Die Steinplatten speichern die Wärme und geben diese nach einer Ruhezeit, in der der Stikkenofen nicht beheizt werden kann, wieder ab.

Die Erfindung soll nun anhand eines bevorzugten Ausführungsbeispiels erläutert werden.

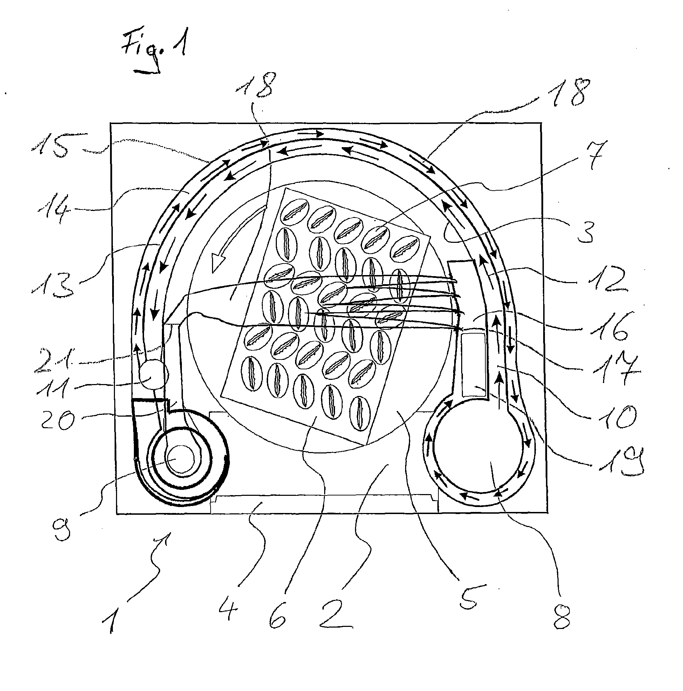

Die Figur zeigt eine Draufsicht auf eine horizontale Schnittebene durch einen Stikkenofens gemäß einem erfindungsgemäßen Ausführungsbeispiel.

Ein Stikkenofen 1 weist eine Backkammer 2 auf, die von einer Backkammerwand 3 und einer Backkammertür 4 gebildet wird. Die Backkammer 2 ist oben und unten durch weitere Wandelemente begrenzt. Da die Figur den Ofen im Schnitt von oben zeigt, ist hier nur der Boden sichtbar. Am Boden der Backkammer ist ein drehbarer Teller 5 vorgesehen. Dieser drehbare Teller 5 wird über einen (nicht dargestellten) Elektromotor drehbar angetrieben. Ein Backgutträger 6 kann in die Backkammer 2 eingebracht und auf dem drehbaren Teller 5 platziert werden. Der Backgutträger 6 besteht aus einem Gestell mit Rädern an seiner Unterseite. In dem Gestell sind mehrere Backbleche eingeschoben, auf denen Backgut 7, wie beispielsweise Brötchen, liegt. Alternativ (nicht gezeigt) kann der Backgutträger auch eine Aufhängevorrichtung aufweisen, mit der er an einer (ebenfalls nicht gezeigten) Drehvorrichtung in der Backkammer aufgehängt werden kann. Die Aufhängevorrichtung ist dann ebenfalls über einen Motor drehbar angetrieben.

Auf einer Seite der Backkammer 2, in der Figur von oben betrachtet auf der rechten Seite, ist als Heizquelle ein (nicht gezeigter) Brenner in einer Brennkammer 8 vorgesehen. Die Brennkammer 8 kann alternativ auch auf der linken Seite der Backkammer 2 angeordnet sein. Die Brennkammer 8 befindet sich neben der Backkammer 2 in einem Eckbereich des Stikkenofens 1. Die Brennkammer 8 ist als senkrecht stehender, zylindrischer runder Brennraum ausgeführt, der in seiner Längsrichtung am Umfang einen Schlitz aufweist. Der (nicht gezeigte) Brenner ist an der Oberseite der Brennkammer 8 angeordnet und feuert als ein sogenannter Sturzbrenner nach unten in die Brennkammer 8. Alternativ kann der Brennraum auch einen rechteckigen oder anderen polygonen Querschnitt aufweisen.

Der Brenner dient zur Erzeugung von Rauch- oder Heizgas 12, indem Luft mittels Gas, Öl, etc. verbrannt wird. Als Verbrennungsluft dient Außenluft, die entweder aus dem Raum genommen wird, in dem der Ofen steht, oder die über eine Leitung von außen herangeführt wird. Durch die Verbrennung der Außenluft entsteht das heiße Rauch- oder Heizgas.

Von der Brennkammer 8 ausgehend ist ein Heizgaskanal 10, der die Backkammer 2 umläuft, vorgesehen. Die Breite ist von oben gesehen gegenüber der umlaufenden Länge relativ gering, so dass der Kanal als schmaler Kanal bezeichnet werden kann. Der Kanal ist an seinem in der Figur rechten Ende mit der Brennkammer 8 verbunden und bildet dort über seine gesamte Breite eine Öffnung zu der Brennkammer 8, die mit dem Schlitz in der Brennkammer 8 korrespondiert. An seinem anderen Ende mündet der Heizgaskanal 10 in einen Kamin 11. Der Heizgaskanal 10 weist eine der Backkammer 2 zugewandte Wand, und eine von der Backkammer 2 abgewandte Wand auf. Die der Backkammer 2 zugewandte Wand wird als die Backkammerwand 3 ausgebildet. Die von der Backkammer 2 abgewandte Wand wird als eine Wärmetauscherwand 13 ausgebildet. Der Heizgaskanal 10 ist oben und unten durch weitere Wandelemente begrenzt.

Auf der anderen Seite der Backkammer 2, in der Figur von oben gesehen links im vorderen Eckbereich des Stikkenofens 1, außerhalb der Backkammer 2, ist ein Heißluftventilator 9 in einer separaten Kammer vorgesehen. Alternativ kann der Heißluftventilator 9 auch auf der rechten Seite, jedenfalls auf der anderen Seite als die Brennkammer 8, angeordnet sein. Hier ist der Heißluftventilator 9 als Radialgebläse ausgebildet, das über einen (nicht gezeigten) Motor angetrieben wird. Die Drehzahlen können variabel eingestellt werden. Das Gebläse ist so angeordnet, dass dessen Achse senkrecht, also im rechten Winkel zum Ofenboden, verläuft. Der Ventilator erstreckt sich über nahezu die gesamte Höhe der Backkammer 2.

Anschließend an den Ventilator ist ein Umluft- oder Heißluftkanal 14 vorgesehen, der um den Heizgaskanal 10 läuft. Der Heißluftkanal 14 weist eine der Backkammer 2 zugewandte Wand und eine von der Backkammer 2 abgewandte Wand auf. Die der Backkammer 2 zugewandte Wand wird durch die Wärmetauscherwand 13 gebildet. Die von der Backkammer 2 abgewandte Wand wird durch eine isolierte Trennwand 15 gebildet. Der Heißluftkanal 14 umläuft weiterhin die Brennkammer 8, wobei hier die Fortsetzung der Wärmetauscherwand 13 zu der von der Backkammer 2 abgewandten Wand wird und die Trennwand 15 zu der der Backkammer zugewandten Wand wird. Die Trennwand ist in diesem Bereich nicht isoliert.

Der Heißluftkanal 14 endet in einem Austrittskanal 16, der sich innerhalb der der Backkammer 2 zugewandten Wand des Heizgaskanals 10 von der Brennkammer 8 bis etwas über die Hälfte der Tiefe der Backkammer 2 (von vorne betrachtet) hinaus erstreckt. Der Austrittskanal 16 weist auf seiner der Backkammer 2 nach innen zugewandten Seite radial zu der Backkammer 2 nach innen gerichtete Austrittsöffnungen 17 für Heißluft 18, sogenannte Zuluftschlitze, auf. Die Austrittsöffnungen 17 sind so eingestellt, dass der größere Teil der Heißluft 18 durch das Zentrum der Backkammer 2 geführt wird, was bewirkt, dass das Backgut 7 gleichmäßig gebacken und gefärbt wird. Der Heißluftkanal 14 erstreckt sich annähernd über die gesamte Höhe der Backkammer 2 und die Austrittsöffnungen 17 sind gleichmäßig über die gesamte Höhe des Austrittskanals 16 verteilt angeordnet.

Innerhalb des Austrittskanals 16 ist ein Schwadenerzeuger 19 kurz vor den Austrittsöffnungen 17 angeordnet. Der Schwadenerzeuger 19 ist hier nur schematisch dargestellt. In dem hier gezeigten Ausführungsbeispiel ist der Schwadenerzeuger 19 am Ende des Heißluftkanals 14, kurz vor den Austrittsöffnungen 17, angeordnet. Durch den Schwadenerzeuger 19 wird Dampf in einer gewünschten Menge erzeugt, indem dem Schwadenerzeuger 19 über (nicht dargestellte) Lanzen Wasser in der erforderlichen Menge zugeführt wird. Da der Schwadenerzeuger 19 im Betrieb ebenfalls sehr heiß wird, verdampft dieses Wasser sofort. Durch die Anordnung des Schwadenerzeugers 19 in der Nähe der Austrittsöffnungen 17 gelangt der Dampf unmittelbar nach seiner Erzeugung an das Backgut, da der Weg dorthin der kürzest mögliche ist. Dadurch kann sich der Dampf nach seiner Erzeugung nicht stark weiter erhitzen. Dies ist sehr vorteilhaft für die Qualität des Backguts, da sich der kühlere Dampf schneller am Backgut niederschlägt und kondensiert. Durch die zugeführte Feuchtigkeit werden die Poren des Backguts geschlossen und ein Austrocknen kann verhindert werden. Außerdem bekommt das Backgut eine glänzende Außenhaut und verleiht dem Backgut dadurch ein ansprechenderes Aussehen.

Dem Austrittskanal 16 bezüglich des Zentrums der Backkammer 2 gegenüberliegend ist ein Ansaugkanal 20 vorgesehen, der das andere Ende des Heißluftkanals 14 bildet. Der Ansaugkanal 20 erstreckt sich annähernd über die gesamte Höhe der Backkammer 2 und die Ansaugöffnungen 21 sind gleichmäßig über die gesamte Höhe des Ansaugkanals 20 verteilt angeordnet. Der Ansaugkanal 20 mündet in den Heißluftventilator 9. Der Heißluftkanal 14, der Austrittskanal 16 und der Ansaugkanal 20 sind oben und unten ebenfalls durch weitere Wandelemente begrenzt.

Die Backkammerwand 3, die Wärmetauscherwand 13 und die Trennwand 15 bestehen in dem vorliegenden Ausführungsbeispiel aus Metall, vorzugsweise aus Stahl St 12-03 und haben eine Dicke von ca. 2,5 mm. Aufgrund der guten Wärmeleiteigenschaften von Metall nehmen die Wände die Wärme von dem Heizgas 12 auf der einen Seite sehr schnell auf und können sie auch ebenso schnell wieder an die die Backkammer erhitzende Luft und die Backkammer 2 auf der anderen Seite übertragen. Der Stahl ist langlebig und wenig störanfällig. Sollte er doch einmal defekt sein, so ist seine Reparatur äußerst einfach. Die mangelhafte Stelle wird einfach herausgeschnitten und an diese Stelle wird ein Reparaturblech eingeschweißt. Allerdings soll bereits an dieser Stelle betont werden, dass diese Wände keineswegs nur auf dieses Material beschränkt sind.

Im vorliegenden Ofen hat die Backkammerwand 3 eine Höhe von ca. 2000 mm und eine seitliche Erstreckung von der Brennkammer 8 bis zum Heißluftventilator 9 von ca. 2500 mm. Entsprechend groß ist die Fläche der Backkammerwand 3 und der Wärmetauscherwand 13, die sich hinter der Backkammerwand 3 befindet und diese umgibt. Diese riesige Fläche ist hervorragend dazu geeignet, Wärme von der durch das Heizgas 12 erhitzten Seite aufzunehmen und auf der anderen Seite abzugeben, das heißt einerseits von der Backkammerwand 3 in die Backkammer 2 abzustrahlen und andererseits durch die Wärmetauscherwand 13 an die Heißluft 18 weiterzugeben.

Sowohl in dem Heißluftkanal 14 als auch in dem Heizgaskanal 10 können Luftleitbleche bzw. Luftverwirbelungsbleche angeordnet sein, die hier jedoch nicht dargestellt sind. Diese Luftleitbleche dienen dazu, die vom Heißluftventilator 9 in den Heißluftkanal 14 eingesaugte Luft gleichmäßig an der Wärmetauscherwand 13 zu verteilen, bzw. das vom Brenner erhitzte Heizgas 12 zu verwirbeln und an der gesamten Wärmetauscherwand 13 und der Backkammerwand 3 zu verteilen.

Im Folgenden wird die Funktion des Ofens beschrieben.

Wie in der Figur gezeigt ist, wird das Backgut 7 auf Backblechen etagenweise übereinander in dem fahrbaren Backgutträger 6 angeordnet. Der Backgutträger 6 wird in die Backkammer 2 eingebracht und auf dem drehbaren Teller 5 platziert. Der drehbare Teller 5 dreht sich während des Backvorgangs kontinuierlich oder intermittierend in der durch den Pfeil gezeigten Richtung. Es ist aber auch denkbar, dass der drehbare Teller 5 seine Drehrichtung in bestimmten Intervallen immer wieder wechselt.

Im Betrieb erzeugt der Brenner in der Brennkammer 8 heißes Rauch- oder Heizgas 12, indem Luft mittels Gas, Öl, oder einem anderen Brennstoff verbrannt wird. Das Heizgas 12 könnte jedoch genau so gut über eine Elektroheizung erhitzt werden. Das so erhitzte Gas strömt durch den Heizgaskanal 10. Am Ende des Heizgaskanals 10 wird es über den Kamin 11 abgeleitet. Das heiße Heizgas 12 erwärmt dabei die Backkammerwand 3 und die Wärmetauscherwand 13. Es durchläuft den Heizgaskanal 10 in vorteilhafter Weise im Wesentlichen horizontal.

Auf der anderen Seite der Wärmetauscherwand 13 befindet sich der Heißluftkanal 14. Die Heißluft 18 wird mittels des Heißluftventilators 9 durch die Ansaugöffnungen 21, die über annähernd die gesamte Höhe der Backkammer 3 verteilt angeordnet sind, aus der Backkammer 2 angesaugt, wobei über die Höhe der Backkammer ein gleichmäßiger, horizontaler Luftstrom unterstützt wird, und in den Heißluftkanal 14 geblasen wird. Dadurch kann die Heißluft 18 die von der Wärmetauscherwand 13 aufgenommene Wärme optimal übernehmen und die Wärmetauscherwand 13 ihrerseits wieder kühlen. Die große Fläche der Wärmetauscherwand 13 sorgt dabei für einen effizienten Wärmeübergang.

Die erwärmte Backkammerwand 3 gibt die Wärme zusätzlich über Strahlung an die Backkammer 2 und somit an das Backgut 7 ab. Durch diese Wärmestrahlung erhöht sich die Wärmeenergie, die an das Backgut 7 abgegeben wird, wesentlich, und spart somit Zeit und eingesetzte Energie für den Backvorgang.

Ein weiterer Vorteil dieser Anordnung liegt darin, dass keine Rohre etc. den Luftstrom der zu erhitzenden Heißluft behindern und einen Gegendruck erzeugen, wie dies beispielsweise in einem Röhrentauscher der Fall war. Dadurch genügt es, wenn ein verhältnismäßig kleines Gebläse verwendet wird, da kaum Strömungswiderstände überwunden werden müssen. Als Gebläse wird ein Radialgebläse verwendet werden. Das Radialgebläse kann mit einer relativ geringen Drehzahl betrieben werden, da, wie bereits erwähnt, die Luft keine großen Widerstände überwinden muss. Dadurch kann die Luftgeschwindigkeit niedrig gehalten werden. Eine niedrige Luftgeschwindigkeit ist jedoch für die Backqualität vorteilhaft. Sie verhindert, dass das Backgut schnell austrocknet. Die Luftgeschwindigkeit kann auch deshalb niedrig gehalten werden, weil die Wärmetauscherwand 13 auch bei einem geringeren Luftmengendurchsatz ausreichend gekühlt wird.

Wie in der Figur dargestellt ist, strömt die Heißluft 18 im Heißluftkanal 14 von links nach rechts im Uhrzeigersinn. Am Ende des Heißluftkanals 14 tritt sie über den Austrittskanal 16 durch die Austrittsöffnungen 17, die ebenfalls über annähernd die gesamte Höhe der Backkammer 3 gleichmäßig verteilt sind, wieder aus und gelangt zurück in die Backkammer 2, wobei gemeinsam mit den gleichmäßig über die annähernd gesamte Höhe der Backkammer 2 verteilten Ansaugöffnungen 21 über die Höhe der Backkammer ein gleichmäßiger, horizontaler Luftstrom gebildet wird. Das Heizgas 12 strömt in dem Heizgaskanal 10 in der umgekehrten Richtung, d.h. im Gegenuhrzeigersinn von rechts nach links, wie in der Figur gezeigt ist. Der Vorgang des Wärmetauschs erfolgt also im Gegenstromprinzip. Dies sorgt ebenfalls für einen hohen Wirkungsgrad.

Im Heißluftkanal 14 befindet sich der Schwadenerzeuger 19. Wie bereits erwähnt, dient der Schwadenerzeuger 19 dazu, der erhitzten Heißluft 18 Dampf zuzugeben. Dadurch wird die Qualität des Backguts 7 verbessert, da sich der Dampf auf dem Backgut niederschlägt, dort die Poren verschließt und somit ein Austrocknen verhindert. Der Dampf sollte möglichst nach seiner Erzeugung nicht weiter erhitzt werden, da ein möglichst kühler Dampf am Backgut 7 schneller kondensiert und die Feuchtigkeit abgeben kann. Der Dampf wird in der gewünschten Menge erzeugt, indem dem Schwadenerzeuger 19 über (nicht dargestellte) Lanzen Wasser in der erforderlichen Menge zugeführt wird, das durch die Hitze sofort verdampft. Damit der Dampf jedoch nicht zu heiß werden kann, sondern möglichst schnell zum Backgut 7 gelangt, ist der Schwadenerzeuger 19 kurz vor den Austrittsöffnungen 17 angeordnet.

Als Alternative kann die Wärmetauscherwand 13 beispielsweise auch aus einem Steinmaterial hergestellt werden. Dies hat den Vorteil, dass der Stein die Wärme speichern kann und sie nach der Ruhezeit, in der der Stikkenofen nicht geheizt werden kann, wieder abgeben kann.

## Patentansprüche

1. Ofen, insbesondere Stikkenofen, mit
einer Backkammer (2), die eine Backkammerwand (3) aufweist, einer Heizquelle zur Erzeugung eines Heizgases (12),
einem die Backkammer zumindest teilweise umlaufenden Heizgaskanal (10) mit einer der Backkammer (2) zugewandten Wand und einer der Backkammer (2) abgewandten Wand, durch den das. Heizgas (12) strömt,
einem Heißluftkanal (14), in dem zu erwärmende Heißluft (18) strömt,
**dadurch gekennzeichnet, dass**
der Heißluftkanal (14) angrenzend an der der Backkammer (2) abgewandten Wand des Heizgaskanals (10) vorgesehen ist, und
die der Backkammer (2) zugewandte Wand des Heizgaskanals (10) durch die Backkammerwand (3) gebildet wird.

2. Ofen nach einem der vorhergehenden Ansprüche, **dadurch gekennzeichnet, dass**
die der Backkammer (2) zugewandte Wand und die der Backkammer (2) abgewandte Wand des Heizgaskanals (10) eine Höhe von im Wesentlichen 2000 mm aufweisen.

3. Ofen nach einem der vorhergehenden Ansprüche, **dadurch gekennzeichnet, dass**
die Heizquelle einen senkrecht stehenden zylindrischen Brennraum vorsieht.

4. Ofen nach einem der vorhergehenden Ansprüche, **dadurch gekennzeichnet, dass**
der Heizgaskanal (10) als ein flacher Kanal vorgesehen ist, an dessen einem Ende die Heizquelle und dessen anderem Ende ein Kamin (11) vorgesehen ist.

5. Ofen nach einem der vorhergehenden Ansprüche, **dadurch gekennzeichnet, dass**
die Backkammerwand (3) so ausgebildet ist, dass Strahlungswärme an die Backkammer (2) abgegeben wird.

6. Ofen nach einem der vorhergehenden Ansprüche, **dadurch gekennzeichnet, dass**
der Ofen einen Heißluftventilator (9), und Ansaugöffnungen (21) und Austrittsöffnungen (17) im Heißluftkanal (14) aufweist,
die Heizquelle und der Kamin (11) an den Enden des Heizgaskanals (10), und der Heißluftventilator (9), die Ansaugöffnungen (21) und die Austrittsöffnungen (17) im Heißluftkanal (14) so angeordnet sind, dass das Heizgas (12) im Heizgaskanal (10) und die Heißluft (18) im Heißluftkanal (14) in entgegengesetzte Richtungen strömen.

7. Ofen nach Anspruch 6, **dadurch gekennzeichnet, dass**
die Austrittsöffnungen (17) des Heißluftkanals (14) und die Ansaugöffnungen (21) im Wesentlichen über die gesamte Höhe der Backkammer (2) verteilt, gegenüberliegend so angeordnet sind, dass die Heißluft (18) die Backkammer (2) horizontal durchströmt.

8. Ofen nach einem der Ansprüche 6 oder 7, **dadurch gekennzeichnet, dass**
der Heißluftventilator (9) als ein Radialventilator mit vertikaler Drehachse ausgebildet ist.

9. Ofen nach einem der vorhergehenden Ansprüche, **dadurch gekennzeichnet, dass**
die der Backkammer (2) abgewandete Wand des Heizgaskanals (10) aus Stein ausgebildet ist.
